# EUROPEAN PATENT APPLICATION

(11) **EP 2 911 103 A1**
(43) Date of publication of application: **26.08.2015**
(21) Application number: 14290049.7
(22) Date of filing: 24.02.2014
(51) Int. Cl.: G06Q 10/10

(54) **Auditing system with increased accuracy**

(71) Applicant: Amadeus S.A.S., 06410 Biot (FR)
(72) Inventor: Canis, Laure, 06300 Nice (FR); Chabod, Alexandre, 06530 Peyrneinade (FR); Giorgi, Laurent, 06300 Nice (FR); Mansour, Bohren Ben, 06160 Antibes (FR); Angelini, Christophe, 06130 Grasse (FR)
(74) Representative: Samson & Partner Patentanwälte mbB

(57) **Abstract**

Methods, systems, and computer program products for auditing a transaction involving a sale by one business entity of a ticket for a travel product provided by another business entity. An audit module receives a pricing context of the transaction and determines an audit amount therefrom. The audit amount is compared to a price charged for the transaction to determine if an agency debit memo should be generated. If the pricing context for the transaction is not available and a ticketing office that issued the ticket is flagged for enhanced auditing, the audit module may determine one or more pricing context parameters by determining prices for a plurality of combinations of pricing context parameters. These prices may be compared to the price charged for the transaction, and the combination of pricing context parameters having a matching price may be selected. The pricing context parameters may then be used to generate audit related documents.

## Description

### TECHNICAL FIELD

The invention generally relates to computers and computer software, and in particular to methods, systems, and computer program products for auditing transactions related to the sale of a travel product.

### BACKGROUND

In the travel industry, airline tickets may be sold through an indirect seller, such as a travel agency. The indirect seller will typically check for available flights that satisfy a traveler's travel plans and, once matching flights are found, book flights for the traveler and collect payment. Payment may be collected by the indirect seller acting as a merchant, or with a validating carrier acting as the merchant.

To ensure that indirect sellers are selling tickets in compliance with restrictions and rules relating to pricing of the ticket, these transactions may be audited. An audit may verify whether the amounts of the fare, taxes, and commission match the restrictions and rules in place regarding the details of the sold ticket. If, for example, the audit indicates that the indirect seller underpriced the product, the validating carrier may be able to recover the shortfall from the indirect seller. Tickets sold by airline offices may also be audited, so that accounting is performed to attribute losses to different entities. Because the annual worldwide revenue of the airline industry is rather large, correcting even small discrepancies in compensation across all sold tickets could result in a significant recovery of otherwise lost revenue.

In current auditing systems, operators re-price travel products (e.g., tickets). This re-pricing can require some manual intervention, especially in the case of auditing transactions involving an exchange or refund of a ticket. If a difference is found between the price charged by the indirect seller and what should have been charged, the operator may make a billing inquiry by issuing a billing document such as an Agency Debit Memo. This may require the operator to enter data specifying the reasons for the billing inquiry, which is a time-consuming process. In addition, ticket data may not always accurately reflect the true pricing criteria present at the time of ticketing. Basing an audit solely on ticket data obtained from Hand-Off Tape (HOT) and/or Carrier Accounting Tape (CAT) files may therefore result in inaccurate audits and less than optimal decisions by the operator regarding whether to send a billing inquiry to the indirect seller to attempt to collect the difference.

Thus, improved systems, methods, and computer program products for analyzing transaction audit results, and for generating billing documents are needed that, for example, may assist in managing transaction auditing, may optimize operator utilization, and may increase net revenues recovered by the auditing party.

### SUMMARY

In an embodiment of the invention, a method of auditing a transaction relating to a ticket sold by a first business entity for a travel product provided by a second business entity is provided. The method includes receiving first data defining a first price charged for the ticket by the first business entity, and second data defining a pricing context for the ticket. The pricing context may comprise a plurality of pricing context parameters. The method may further include determining a second price for the ticket based on the pricing context parameters, and comparing the first price to the second price.

In another embodiment of the invention, an apparatus for auditing the transaction is provided. The apparatus includes a processor and a memory storing instructions that, when executed by the processor, cause the apparatus to receive the first data defining the first price charged for the ticket by the first business entity and the second data defining the pricing context for the ticket. The instructions may further cause the apparatus to determine the second price for the ticket based on the pricing context parameters, and compare the first price to the second price.

In another embodiment of the invention, a computer program product is provided that includes a non-transitory computer readable storage medium including instructions. The instructions may be configured, when executed by the processor, to cause the processor to receive the first data defining the first price charged for the ticket by the first business entity, and receive second data defining the pricing context for the ticket. The instructions may further cause the processor to determine the second price for the ticket based on the pricing context parameters, and compare the first price to the second price.

### BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computer systems in communication via a network.
FIG. 2 is a diagrammatic view of an exemplary computer system of FIG. 1.
FIG. 3 is a diagrammatic view of a block diagram depicting an auditing module and user interface that may be hosted by one or more of the computer systems in FIG. 1.
FIG. 4 is a flow chart depicting an audit process that may be executed by the audit module of FIG. 3.
FIG. 5 is a flow chart depicting a sub-process that may be executed as part of the audit process in FIG. 4.
FIG. 6 is a flow chart depicting a dispute evaluation process that may be executed by the audit module of FIG. 3 in response to receiving a dispute.

### DETAILED DESCRIPTION

Embodiments of the invention may be implemented by a computing system, such as a Global Distribution System (GDS). The computing system may provide processing and database functions that facilitate interconnections between indirect sellers of airline tickets and a plurality of computer reservation systems each associated with a travel product provider. In the context of air travel, the computing system may be configured to allow travelers to book airline tickets and other travel products through indirect sales channels. These indirect sales channels may include online travel agencies or other business entities selling tickets for services to be provided by a different business entity (e.g., a carrier). The indirect sellers may receive payment from the travelers for the booked tickets and compensate the carrier for the cost of the service provided out of the received payment or, alternatively, by having the travelers make a direct payment to the carrier.

The computing system may provide auditing features that enable the travel product provider to audit sales of tickets or other transactions to determine if the product was priced correctly by the indirect seller. To improve decisions relating to the generation of billing documents and to reduce the amount of operator effort required to perform an audit and/or to generate the billing documents, the computing system may provide auditing features that use a pricing context to determine an audit amount for the transaction. The pricing context may include a plurality of pricing context parameters, and may be obtained from a pricing context database maintained by the GDS. This database may also store output from a fare engine used to price the ticket during the transaction leading to the sale of the ticket.

In instances for which the pricing context is not directly available, an enhanced auditing process may perform a scenario analysis of possible pricing context parameters. The scenario analysis may generate possible pricing context parameters based on a price charged for the transaction and data relating to the business entity and/or ticketing office that sold the travel product. This data may include a ticketing office code, corporate codes, Passenger Type Codes (PTCs), discount codes, and booking classes that the business entity is entitled to use for pricing tickets. A plurality of prices for the sold ticket may be determined using various combinations of pricing context parameters, including but not limited to pricing contexts having different combinations of corporate code and Passenger Type Code. A price may then be selected from the prices that most closely match the price of the ticket sold in the transaction being audited. The pricing context parameters that produced the matching price may then be compared to the ticket data to determine whether or not a billing document should be generated. By using pricing context data to make auditing decisions and automatically populate portions of generated auditing documents, embodiments of the present invention may improve auditing accuracy over conventional auditing systems lacking these features.

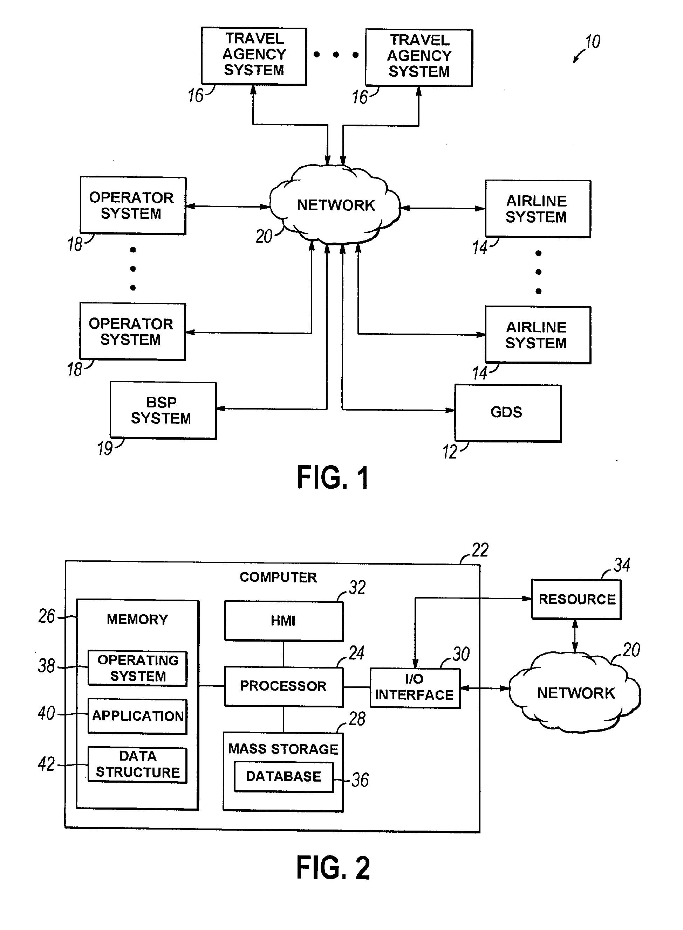

Referring now to FIG. 1, an operating environment 10 in accordance with an embodiment of the invention may include a Global Distribution System (GDS) 12, one or more travel product provider systems, such as airline systems 14, one or more indirect seller systems, such as travel agency systems 16, one or more operator systems 18, and a Billing and Settlement Plan (BSP) system 19. Each of the GDS 12, airline systems 14, travel agency systems 16, operator systems 18, and BSP system 19 may communicate through a network 20. The airline systems 14 may each include a Computer Reservation System (CRS) and/or billing system for the respective airline that enables the GDS 12 and/or travel agency systems 16 to reserve and pay for airline tickets. The airline systems 14 may also interact with each other, either directly or through the GDS 12, to enable a validating carrier to sell tickets for seats provided by the operating carrier. The operating carrier may then bill the validating carrier for the services provided. Billing between business entities acting as indirect sellers and business entities acting as travel service providers may be provided by the BSP system 19. The network 20 may include one or more private and/or public networks (e.g., the Internet) that enable the exchange of data.

The GDS 12 may be configured to facilitate communication between the airline systems 14 and travel agency systems 16 by enabling travel agents, validating carriers, or other indirect sellers to book reservations on one or more airline systems 14 via the GDS 12. To this end, the GDS 12 may maintain links to each of the airline systems 14 via the network 20. These links may allow the GDS 12 to route reservation requests from the airline system 14 of the validating carrier and/or the travel agency system 16 to the corresponding airline system 14 for the operating carrier. The airline and travel agency systems 14, 16 may thereby book flights on multiple airlines via a single connection to the GDS 12. The GDS 12 may store copies of Passenger Name Records (PNRs) generated by the airline systems 14, as well as data defining pricing context parameters and ticket prices associated with booked reservations in one or more searchable databases. This data may allow a PNR to be maintained by the GDS 12 that includes a complete set of flight data for an itinerary including air segments from multiple airlines. The stored data may also allow more accurate auditing of transactions involving the sale of tickets by the indirect sellers.

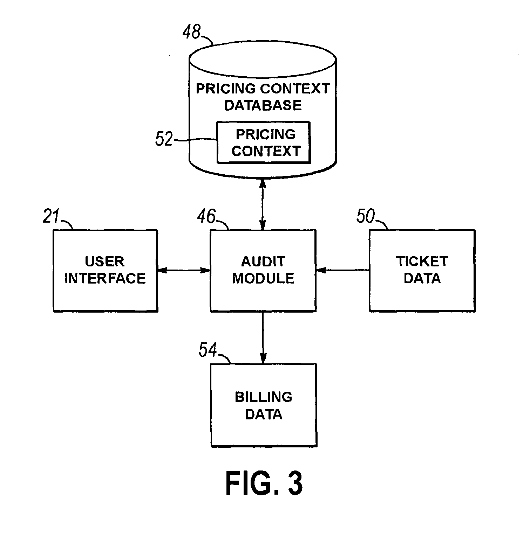

The operator systems 18 may be in communication with the GDS 12 via the network 20 or some other suitable connection, and may provide system operators with a terminal or other suitable interface to the GDS 12. Operators may thereby communicate with the GDS 12 via the operator systems 18 and execute tasks relating to the auditing of transactions. The operators may also execute tasks relating to actions taken to recover discrepancies uncovered by the audits. To facilitate this process, modules hosted by the GDS 12 and/or other computer systems comprising the operating environment 10 may provide a user interface 21 (FIG. 3) via the operator system 18. The user interface 21 may be configured to display pricing context parameters, automatically populate data entry fields, propose responses to auditing documents, and otherwise enable the operator to conduct audits and generate billing documents.

The BSP system 19 may be configured to receive data from the ticketing office of the travel agency or validating carrier reporting the sale of the ticket in the name of the operating carrier. In the United States, the Airline Reporting Corporation (ARC) normally provides this service. In any case, the BSP may act as a Business Process Outsourcer (BPO) that provides a clearing house that settles accounts between travel agencies, validating carriers, operating carriers, and any other business entity involved in the transaction. The operating carrier may thereby collect a fare via the BSP for providing the seat.

Referring now to FIG. 2, the GDS 12, airline systems 14, travel agency systems 16, operator systems 18, and BSP system 19 of operating environment 10 may be implemented on one or more computer devices or systems, such as exemplary computer system 22. The computer system 22 may include a processor 24, a memory 26, a mass storage memory device 28, an input/output (I/O) interface 30, and a Human Machine Interface (HMI) 32. The computer system 22 may also be operatively coupled to one or more external resources 34 via the network 20 and/or I/O interface 30.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. Memory 26 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 36 may reside on the mass storage memory device 28, and may be used to collect and organize data used by the various systems and modules described herein.

Processor 24 may operate under the control of an operating system 38 that resides in memory 26. The operating system 38 may manage computer resources so that computer program code embodied as one or more computer software applications, such as application 40 residing in memory 26, may have instructions executed by the processor 24. In an alternative embodiment, the processor 24 may execute the application 40 directly, in which case the operating system 38 may be omitted. One or more data structures 42 may also reside in memory 26, and may be used by the processor 24, operating system 38, and/or application 40 to store or manipulate data.

The I/O interface 30 may provide a machine interface that operatively couples the processor 24 to other devices and systems, such as the network 20 and/or external resource 34. The application 40 may thereby work cooperatively with the network 20 and/or external resource 34 by communicating via the I/O interface 30 to provide the various features, functions, and/or modules comprising embodiments of the invention. The application 40 may also have program code that is executed by one or more external resources 34, or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources 34, or provided by computing resources (hardware and software) that are provided as a service over the network 20, such as a cloud computing service.

The HMI 32 may be operatively coupled to the processor 24 of computer system 22 in a known manner to allow a user to interact directly with the computer system 22. The HMI 32 may include video and/or alphanumeric displays, a touch screen, a speaker, and any other suitable audio and visual indicators capable of providing information to the user. The HMI 32 may also include input devices and controls such as an alphanumeric keyboard, a pointing device, keypads, pushbuttons, control knobs, microphones, etc., capable of accepting commands or input from the user and transmitting the entered input to the processor 24.

An airline ticket purchased through one of the airline or travel agency systems 14, 16 may involve pricing, booking, and ticketing. The flight may be priced by the ticketing office with the help of the fare engine. The fare engine may reside in the GDS 12, and may determine the price for the ticket based on the plurality of pricing context parameters comprising the pricing context. The pricing context parameters may thereby define the conditions under which the ticket is being priced. Examples of pricing context parameters may include, but are not limited to a pricing date, an office code that identifies the ticketing office originating the ticket, a Passenger Type Code that identifies a type of passenger (e.g., infant, child, adult, adult standby, military, etc), a corporate code that identifies a negotiated rate or corporate discount for which the traveler is eligible, and a booking class code that identifies a class of service (e.g., first class, business class, economy class).

Booking the flight may include checking the operating carrier inventory for availability of the flight. This check may include sending a reservation request from the airline or travel agency system 14, 16 to the GDS 12. The GDS 12 may in turn query a corresponding airline system 14 for flight availability. If a seat is available for the requested flight, the flight may be booked, and the operator carrier inventory decreased to reflect the booking. In response to the traveler approving the transaction, the traveler's account may be billed for the price of the ticket.

When auditing transactions involving the sale of a ticket by the indirect seller, the audit amount representing the price that should have been charged for the ticket may be determined by the computing system. The audit amount may be based on data relating to the ticket, such as a booking code, a class of service, an origination-destination city pair, a date of travel, or any other suitable data that defines parameters which characterize the ticket. This ticket data may be used to determine if fare tariffs, business rules, routing maps, class of service tables, tax information, etc. were properly implemented by the ticketing office to determine the correct amount that should have been charged for the ticket. Business rules may include booking conditions such as minimum stay or advance purchase, and may be specific to a city pair and/or a class of service. Although auditing commonly refers to the process of verifying the pricing of tickets sold by the travel agent on behalf of the validating carrier, and the corresponding billing of the travel agent, the same principles can be applied to interline billing associated with a ticket sold by a validating carrier on behalf of an operating carrier. In the case of interline billing, outward auditing may refer to verification by the operating carrier that the validating carrier has sold the ticket for the right amount, and inward auditing may refer to verification by the validating carrier that the operating carrier has billed the right amount.

In the case of outward auditing, the actual fare charged by the indirect seller may be compared to a fare that should have been charged for the ticket. For inward auditing, the amount billed by the operating carrier may be compared to a prorated amount to which the operating carrier is entitled. In either case, if a discrepancy exists relative to the audit amount, the auditing party may take steps to recover the discrepancy. The process of recovering the discrepancy may begin with the validating carrier issuing an Agency Debit Memo to the indirect seller, e.g., the travel agency that booked the ticket. In the case of a billing dispute between the operating and validating carriers, the process may include issuing an interline bill to the validating carrier (i.e., interline outward billing) or issuing a rejection memo to the operating carrier (i.e., interline inward billing). Other steps that may occur as part of the process of recovering the discrepancy include the travel agency issuing a dispute of the Agency Debit Memo, and the validating carrier inquiring into the dispute and either accepting or rejecting the dispute.

Referring now to FIG. 3, an audit module 46 may be operatively coupled to the user interface 21 and a pricing context database 48. The pricing context database 48 may be hosted by the GDS 12, and may store data relating to transactions involving tickets sold by the indirect sellers. The audit module 46 may be configured to receive ticket data 50 from one or more sources, such as the GDS 12, the airline system 14, the travel agency system 16, and/or the BSP system 19. The ticket data 50 may include the issue date of the ticket, an identity of the ticketing office that issued the ticket, the Passenger Type Code, the booking class of the ticket, and the price of the ticket. If a pricing context 52 is available for the transaction being analyzed, the audit module 46 may retrieve the pricing context 52 from the pricing context database 48. If the pricing context 52 for the transaction in question is not available from the pricing context database 48, the audit module 46 may attempt to determine one or more pricing context parameters based on the ticket data 50. In any case, the audit module 46 may generate billing data 54 based on the received ticket data 50 and pricing context 52 in response to operator input via the user interface 21.

Conventional auditing systems and methods may calculate the audit amount for the transaction based on ticket parameters provided by the ticket data 50. The audit amount may then be used to determine if the ticket was priced correctly. However, the pricing context 52 may include pricing context parameters having different values than those indicated by the ticket data 50 due to errors in the ticketing process. The pricing context may also include parameters that are not defined by the ticket data 50. For example, a pricing date parameter of the pricing context 52 may comprise the date on which the ticket was priced by the fare engine (i.e., the "real" pricing date) or a pricing date provided by a pricing date override command issued by the ticketing office.

In either case, the issue date of the ticket data 50 may not match the pricing date parameter of the pricing context 52. This mismatch between the ticket data 50 and the pricing context 52 may occur, for example, if the ticketing office waited several days between pricing the ticket and issuing the ticket. The ticketing office may also have used the pricing override command to analyze a difference in fares or taxes between a current date and a prior date, and then inappropriately priced the ticket based on the override date rather than the current date. If the pricing context 52 is not available, the audit module 46 may use the issue date as a default pricing date. However, for the reasons described above, using the issue date to generate an audit price for the ticket may produce an inaccurate result.

Use of other types of override commands may also result in ticket parameters that do not match their corresponding pricing context parameters. By way of example, a travel agent may use an office override command to price a ticket that is only available through another ticketing office. The travel agent may also use the office override command to adjust a fare to match a negotiated rate. In either case, if the travel agent uses the office override command to price the ticket and the ticket is issued, the ticketing office number associated with the ticket data 50 may not match the ticketing office number used to price the ticket.

As another example, if the travel agent does not know the correct Passenger Type Code at the time the ticket is priced, they may use a Passenger Type Code override command to correct the Passenger Name Record (PNR) after the ticket has issued. There may also be Passenger Type Codes available for pricing the ticket that are not supported by the ticket data 50, such as military Passenger Type Codes. Travel agents may also use a booking class override command to price a ticket if they are unable to find a fare for the original booking class. When the travel agent uses the booking class override in this manner, the booking class parameter of the pricing context 52 may not correspond to the booking class indicated by the ticket data 50.

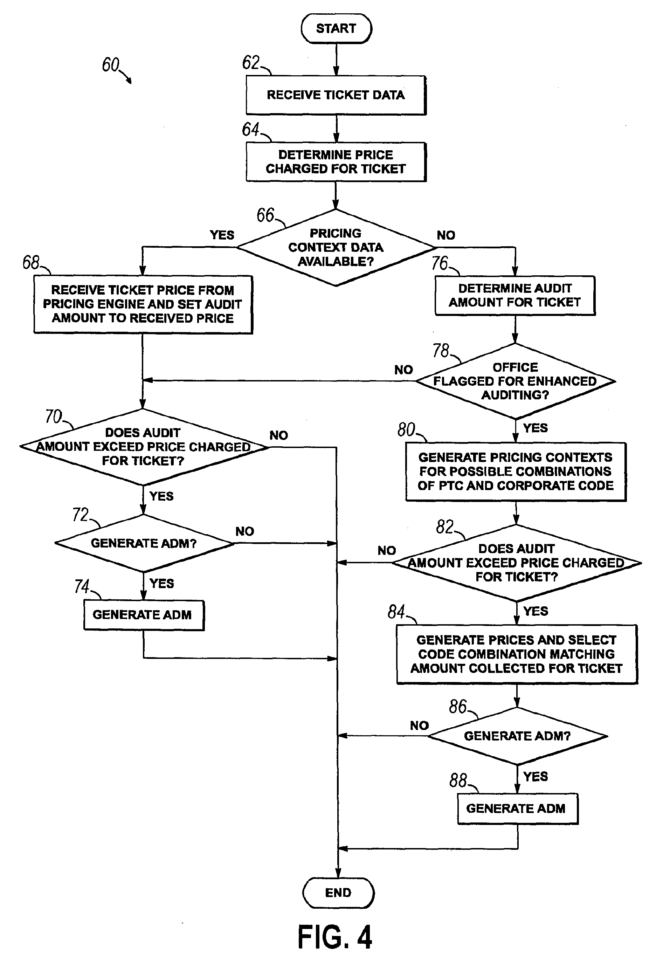

Referring now to FIG. 4, a flow chart is presented that depicts an audit process 60 which may be executed by the audit module 46 to determine if the indirect seller properly charged for the ticket. In block 62, the audit module 46 receives the ticket data 50. The ticket data 50 may be received, for example, from the BSP system 19, as part of a dispute of an Agency Debit Memo received from the indirect seller, or in connection with some other billing communication. In response to receiving the ticket data 50, the audit process 60 may proceed to block 64 and determine the price charged for the ticket, which may be included in the ticket data 50 as a ticket price parameter. The audit process 60 may then proceed to block 66.

In block 66, the audit process 60 may determine if the pricing context 52 is available for the transaction leading to the sale of the ticket. This determination may be made, for example, by querying the pricing context database 48 for the pricing context 52 and/or a stored price that was generated by the fare engine during the transaction. If the pricing context 52 is available ("YES" branch of decision block 66), the audit process 60 may proceed to block 68. In block 68, the audit process 60 receives the stored price from the pricing context database 48, or otherwise receives a price calculated by the pricing engine based on the pricing context 52. The audit process 60 may then set the audit amount to the received price before proceeding to block 70.

In block 70, the audit process 60 may determine if the audit amount exceeds the price charged for the ticket. In response to the audit amount exceeding the price charged for the ticket ("YES" branch of decision block 70), the audit process 60 may proceed to block 72. In block 72, the audit process 60 may determine if the Agency Debit Memo should be generated. This determination may depend on whether an expected value of generating the Agency Debit Memo is positive. The expected value may be determined taking into account an amount of the difference between the audit amount and the price charged for the ticket, a cost of generating the Agency Debit Memo, a probability that the audit amount is accurate, a probability that the ticketing office will dispute the Agency Debit Memo, a cost of generating an inquiry in response to the Agency Debit Memo being disputed, or any other suitable parameter that could affect the expected value of generating the Agency Debit Memo. Methods, systems, and computer program products for determining when to issue an Agency Debit Memo and/or inquiry are described in more detail in U.S. Patent Application Ser. No. 13/926,136, filed June 25, 2013 and entitled "Optimizing Generation of Agency Debit Memos ", Attorney Docket No. AMS-143US, the disclosure of which is incorporated herein by reference in its entirety for all purposes.

In response to the audit process 60 determining that the Agency Debit Memo should be generated ("YES" branch of decision block 72), the audit process 60 may proceed to block 74 and cause the Agency Debit Memo to be generated. In response to the audit process 60 determining that the Agency Debit Memo should not be generated ("NO" branch of decision block 72), the audit process 60 may terminate analysis of the ticket data 50 without proposing or otherwise causing an Agency Debit Memo to be generated.

If the pricing context 52 is not available ("NO" branch of decision block 66), the audit process 60 may proceed to block 76 and determine the audit amount for the transaction using the ticket parameters provided by the ticket data 50 and/or default values. The audit process 60 may then proceed to block 78 and determine if the ticketing office that issued the ticket is flagged for an enhanced audit. Whether a particular ticketing office is flagged for the enhanced audit may be determined by the validating carrier, which may provide a list of ticketing offices that should be subjected to the enhanced audit. The audit process 60 may determine if the ticketing office is flagged based on the office code in the ticket data 50. For example, the audit process 60 may use a look-up table including the office codes with an indication of whether the corresponding ticketing office is flagged for the enhanced audit.

By way of example, the validating carrier may determine that certain ticketing offices that issue tickets having certain Passenger Type Codes or corporate codes may trigger generation of significant numbers of inaccurate Agency Debit Memos. To avoid generating inaccurate Agency Debit Memos, these ticketing offices may be flagged for the enhanced audit. The enhanced audit may reduce the chances of generating an inaccurate Agency Debit Memo for a transaction conducted by one of these ticketing offices. Ticketing offices may be flagged in a manner that is validating carrier specific. That is, the determination to subject the ticketing office to enhanced auditing may be based on a combination of the office code and the validating carrier code in the ticket data 50. If the ticketing office that issued the ticket is not flagged for an enhanced audit ("NO" branch of decision block 76), the audit process 60 may proceed to block 70 and the audit conducted using the audit amount from block 76.

If the ticketing office is flagged for the enhanced audit ("YES" branch of decision block 78), the audit process 60 may proceed to block 80. In block 80, the audit process 60 may generate a plurality of pricing contexts, with each pricing context including a different Passenger Type Code and corporate code combination, or code pair. The pricing contexts may include all possible combinations of Passenger Type Code and corporate code that could have been used to price the ticket, or may be limited based on certain assumptions. For example, if the Passenger Type Code indicated by the ticket data 50 is for an adult, the Passenger Type Codes used to generate the possible pricing contexts may include "military" but exclude "child". This determination could be based on the premise that entering a child into the system under a Passenger Type Code for a military passenger cannot be correct.

Because only specific travel agents and/or ticketing offices may be entitled to use certain corporate codes, the possible pricing contexts may be limited to pricing contexts having corporate codes that are known to be available to the travel agent and/or ticketing office that issued the ticket. For example, the audit process 60 may determine the ticketing office that issued the ticket from the ticket data 50. The audit process 60 may then determine all the corporate codes that the identified ticketing office is entitled to use, and generate pricing contexts for each of these codes. Code pairs may also be limited to likely or compatible combinations of Passenger Type Code and corporate code. An example of an unlikely code pair may include an infant or child flying under a corporate code used for employees of a company. The plurality of pricing contexts may thereby be conditioned or otherwise determined based on the ticket parameters. Once the audit process 60 has generated a price for each of the plurality of pricing contexts, the audit process 60 may proceed to block 82.

In block 82, the audit process 60 may determine if the audit amount exceeds the price charged for the ticket. If the audit price does not exceed the price charged for the ticket ("NO" branch of decision block 80), the audit process 60 may determine that the transaction should not be challenged and stop analyzing the transaction. If the audit price exceeds the price charged for the ticket by a sufficient amount ("YES" branch of decision block 78), the audit process 60 may proceed to block 84.

In block 84, the audit process 60 may generate a price for each of the pricing contexts of the plurality of pricing contexts generated in block 80 and compare each of these prices to the price charged for the ticket. If one of the generated prices is within a threshold amount of the price charged for the ticket, the audit process 60 may determine that the associated pricing context comprises the same context pricing parameters that were used to price the ticket by the ticketing office. The threshold amount may be selected so that the audit process 60 ignores minor price discrepancies caused by currency conversion and/or rounding issues. The threshold amount may be defined in any suitable manner, and may be a percentage of the price charged for the ticket. Once the audit process 60 has finished determining whether the price charged for the ticket matches one of the plurality of pricing contexts, the audit process 60 may proceed to block 86.

In block 86, the audit process 60 may determine whether an Agency Debit Memo should be generated. This determination may take into account whether the pricing context parameters determined by the enhanced auditing process match the ticket parameters. The determination may also depend on whether the expected value of generating the Agency Debit Memo is positive, as discussed with respect to block 72. However, the probabilities used to determine the expected value may be adjusted based on whether the pricing context parameters determined by the enhanced auditing process match the ticket parameters. For example, the likelihood of receiving a dispute based on the use of a specific Passenger Type Code by the agent may affect the expected value of the Agency Debit Memo. That is, the likelihood of receiving the dispute may be increased if there is an increased chance that the travel agent used the specific Passenger Type Code correctly. In response to the audit process 60 determining that the Agency Debit Memo should not be generated ("NO" branch of decision block 86), the audit process 60 may end without generating the Agency Debit Memo. If the audit process 60 determines that the Agency Debit Memo should be generated ("YES" branch of decision block 86), the audit process may proceed to block 88 and either generate the Agency Debit Memo, or provide an indication on the user interface 21 that the Agency Debit Memo should be generated.

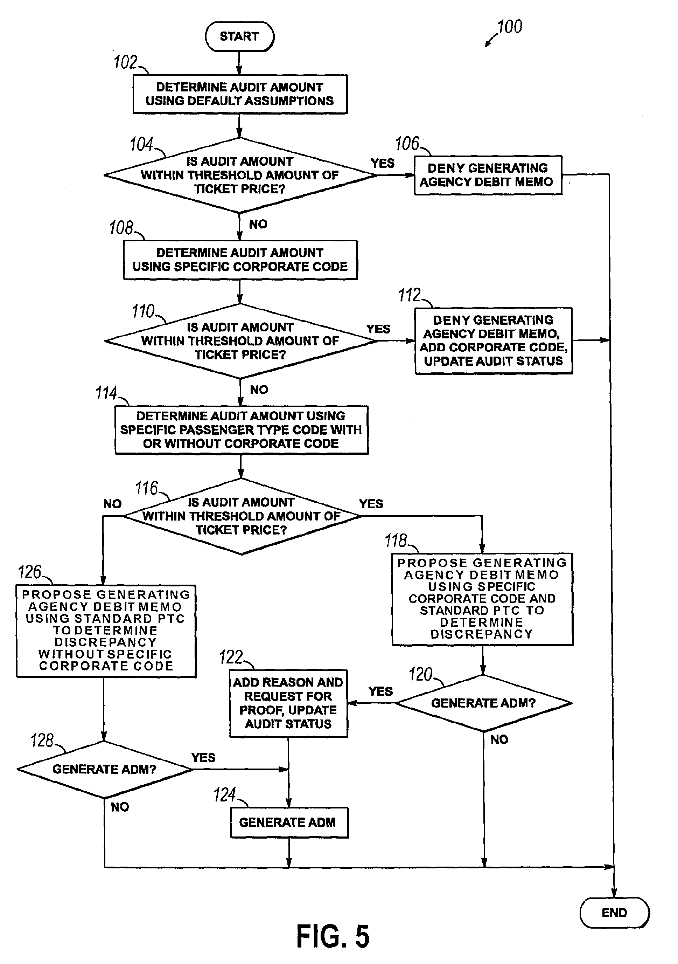

Referring now to FIG. 5, a flow chart is presented that depicts a sub-process 100 that may be executed by the audit module 46 in accordance with the enhanced auditing feature of audit process 60. In block 102, the sub-process 100 may determine the audit amount using default assumptions regarding the values for the pricing context parameters. The default values may include the issue date, office number, Passenger Type Code, and booking class indicated by the ticket data 50. The resulting audit amount may reflect a price that should have been charged for the ticket given the default assumptions, and may be calculated from the default values using business rules.

In response to determining the audit amount in block 102, the sub-process 100 may proceed to block 104 and compare the price charged for the ticket with the audit amount. In response to the audit amount being within a threshold amount of the price charged for the ticket ("YES" branch of decision block 104), the sub-process 100 may proceed to block 106 and deny generating the Agency Debit Memo. The threshold amount in block 104 may be selected, for example, so that the Agency Debit Memo is only generated if the transaction has a discrepancy between the audit amount and the price charged for the ticket sufficient to potentially produce a positive net return. Thus, if the audit amount of the transaction determined using the default values is approximately equal to the price collected for the ticket, the audit module 46 may determine that the Agency Debit Memo should not be generated.

In response to the audit amount not being within the threshold amount of the price charged for the ticket ("NO" branch of decision block 104), the sub-process 100 may proceed to block 108. In block 108, the sub-process re-calculates the audit amount using a specific corporate code as one of the pricing context parameters. The specific corporate code may be, for example, the corporate code identified by comparing prices in the enhanced auditing process described with respect to FIG. 4. The sub-process 100 may then proceed to block 110 and compare the audit amount from block 108 to the price charged for the ticket. In response to the audit amount being within a threshold amount of the price charged for the ticket ("YES" branch of decision block 110), the sub-process 100 may proceed to block 112 and deny generating an Agency Debit Memo. The sub-process 100 may also add the specific corporate code to the ticket data in block 112 and update the audit status to indicate that the audit was optimized. The ticket data may thereby be made consistent with the pricing context determined by the enhanced auditing feature even though the Agency Debit Memo is not generated.

The value of the threshold amount in block 110 may or may not be the same as the value of the threshold amount in block 104. This may result from the expected value of issuing the Agency Debit Memo being adjusted in response to the enhanced auditing process indicating that the specific corporate code was used to price the ticket. For example, the use of the specific corporate code by the ticketing office may change the odds of receiving a dispute to the Agency Debit Memo. Thus, the value of the threshold amount used in decision block 110 may be different than the value of the threshold amount used in block 104 to reflect differences in expected values of the corresponding Agency Debit Memos.

In response to the audit amount not being within the threshold amount of the price charged for the ticket ("NO" branch of decision block 110), the sub-process 100 may proceed to block 114. In block 114, the sub-process re-calculates the audit amount using a specific Passenger Type Code with or without the specific corporate code used to determine the audit price in block 108. For example, the audit amount may be determined without the specific corporate code in response to the enhanced auditing process failing to indicate that the pricing context included the specific corporate code. The specific Passenger Type Code may be determined by the enhanced auditing process described with respect to FIG. 4, and may be determined concurrently with the specific corporate code.

The sub-process 100 may then proceed to block 116 and compare the audit amount determined in block 114 to the price charged for the ticket. As described with respect to the threshold amount in block 110, the value of the threshold amount used in block 116 may or may not be the same as the value of the threshold amounts of blocks 104 and 110. In response to the audit amount being within the threshold amount of the price charged for the ticket ("YES" branch of decision block 116), the sub-process 100 may proceed to block 118. In block 118, the sub-process 100 may propose generating the Agency Debit Memo including the audit amount calculated using the specific corporate code and a standard Passenger Type Code. The sub-process may then proceed to block 120.

In block 120, the sub-process 100 may determine if the Agency Debit Memo should be generated. In a similar manner as described with respect to FIG. 4, this determination may depend on whether the expected value of generating the Agency Debit Memo is positive. The expected value may depend in part on the likelihood of receiving a dispute, which may be adjusted based on the use of the specific Passenger Type Code by the ticketing office. If the sub-process 100 determines that the Agency Debit Memo should not be generated ("NO" branch of decision block 120), the sub-process 100 may end without generating the Agency Debit Memo.

If the sub-process 100 determines that the Agency Debit Memo should be generated ("YES" branch of decision block 120), the sub-process 100 may proceed to block 122. In block 122, the sub-process 100 may add text to a "reason for memo" field in the Agency Debit Memo. This text may notify the ticketing office that the price charged for the ticket corresponds to the price resulting from the specific Passenger Type Code. The text may further indicate to the ticketing office that if they wish to dispute the Agency Debit Memo, the ticketing office should include proof of the Passenger Type Code used to price the ticket in their response. The sub-process 100 may also add the corporate code to the ticket data so that the ticket data is consistent with the pricing context determined by the enhanced auditing feature. The sub-process 100 may also update the audit status to indicate that the audit was optimized. The sub-process 100 may then proceed to block 124 and generate the Agency Debit Memo.

In response to the audit amount not being within the threshold amount of the price charged for the ticket ("NO" branch of decision block 116), the sub-process 100 may proceed to block 126. In block 126, the sub-process 100 may propose generating the Agency Debit Memo using the audit amount calculated using the standard Passenger Type Code without the specific corporate code. The sub-process may then proceed to block 128 to determine if the Agency Debit Memo should be generated. Similarly as described with respect to block 120, this determination may depend on whether the expected value of generating the Agency Debit Memo is positive. If the sub-process 100 determines that the Agency Debit Memo should not be generated ("NO" branch of decision block 128), the sub-process 100 may end without generating the Agency Debit Memo. In response to the sub-process 100 determining that the Agency Debit Memo should be generated ("YES" branch of decision block 128), the sub-process 100 may proceed to block 124 and generate the Agency Debit Memo.

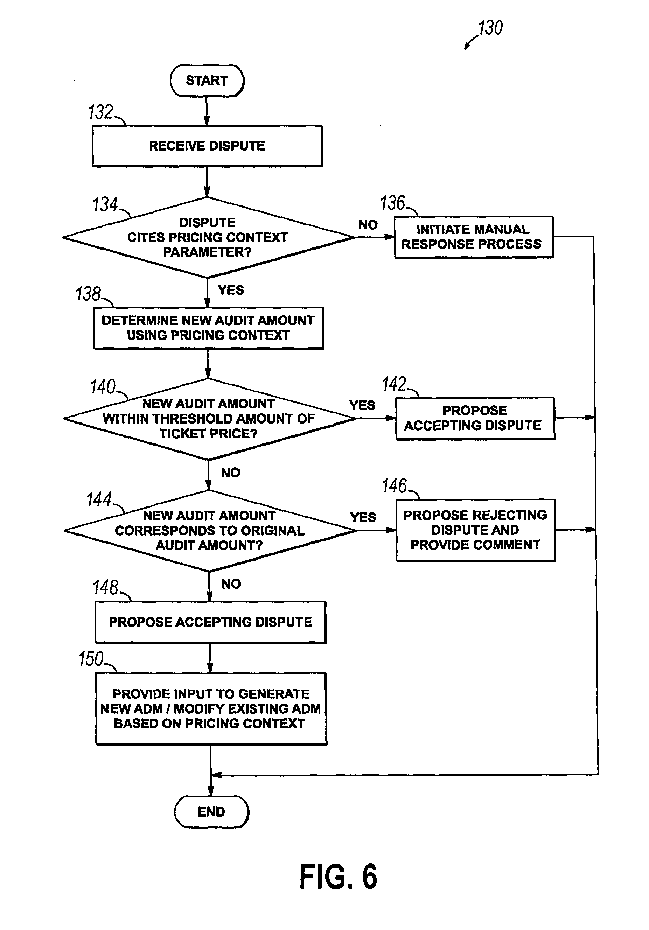

Referring now to FIG. 6, a flow chart is presented that depicts a dispute evaluation process 130 that may be executed by the audit module 46. In block 132, the process 130 receives the dispute. The dispute may be transmitted, for example, from the indirect seller in response to receiving the Agency Debit Memo. In response to receiving the dispute, the process 130 may proceed to block 134 and determine whether the dispute includes an argument that cites one of the pricing context parameters of the pricing context. If the dispute does not cite at least one of the pricing context parameters ("NO" branch of decision block 134), the process may proceed to block 136 and propose a manual response to the operator, which may be communicated to the operator via the user interface 21. If the dispute does cite one of the pricing context parameters ("YES" branch of decision block 134), the process may proceed to block 138.

In block 138, the process 130 may determine a new audit amount using the pricing context. To this end, the process 130 may provide the pricing context to the fare engine to determine the new audit amount. The process 130 may also receive the stored price from the pricing context database 48, in which case the stored price may be used as the new audit amount. In response to determining the new audit amount, the process 130 may proceed to block 140. In block 140, the process 130 may determine if the new audit amount is within a threshold amount of the price charged for the ticket. Similarly as described with respect to FIG. 4, the threshold amount may be selected so that the process 130 ignores minor price discrepancies caused by currency conversion and/or rounding issues. The threshold amount may be defined in any suitable manner, such as by setting the threshold to a percentage of the price charged for the ticket or a percentage of the audit amount.

In response to the new audit amount being within the threshold amount of the price charged for the ticket ("YES" branch of decision block 140), the process 130 may proceed to block 142. In block 142, the process 130 may propose accepting the dispute, such as by displaying a recommendation to accept the dispute via the user interface 21. The recommendation may also provide a "button" or other mechanism that enables the operator to select or otherwise approve the proposal. In response to the new audit amount not being within the threshold amount of the price charged for the ticket ("NO" branch of decision block 140), the process 130 may proceed to block 144.

In block 144, the process 130 may determine if the new audit amount corresponds to an original audit amount in the Agency Debit Memo that precipitated the dispute. The new audit amount may correspond to the original audit amount, for example, if the audit amounts are equal or within a threshold amount. In response to the new audit amount corresponding to the original audit amount ("YES" branch of decision block 144), the process 130 may proceed to block 146. In block 146, the process 130 may propose rejecting the dispute by displaying a corresponding recommendation on the user interface 21. The process 130 may also automatically populate a field in the rejection with a predetermined comment. For example, the process may insert text such as "The ADM is maintained as the new audited amount with 'criteria=abc' does not change audit amount." The comment could be presented to and/or edited by the operator via the user interface 21, thereby reducing the amount of operator effort required to respond to the dispute.

In response to the new audit amount failing to correspond to the original audit amount ("NO" branch of decision block 144), the process 130 may proceed to block 148. In block 148, the process 130 may propose accepting the dispute by displaying a corresponding recommendation on the user interface 21. In response to the operator accepting the dispute, the process 130 may proceed to block 150 and either generate a new Agency Debit Memo, or modify the existing Agency Debit Memo. In a similar manner as described above with respect to rejecting the dispute, the process 130 may automatically populate a field in a response to the dispute or in a new Agency Debit Memo with a predefined comment. For example, the process may populate a response field with text such as "A new airline fare calculation has been performed based on the ticketing office contention that 'criteria=abc'. The amount in the original ADM is thereby recognized as being wrong. This ADM will therefore be closed and a new one created." Another exemplary message that could be included in the response may be "A new airline fare calculation has been performed based on the ticketing office contention that 'criteria=abc'. This ADM has had its amount modified in conformance with the new fare calculation and is being resubmitted." In any case, the resulting new or modified Agency Debit Memo may be automatically populated with information from original ADM. A person having ordinary skill in the art would understand that the above messages are for exemplary purposes only, and that embodiments of the invention are not limited to the above text. This person of ordinary skill would further understand that any suitable messages could be used to automatically populate data fields in the Agency Debit Memo or other audit related documents.

To further facilitate creation/modification of the new/existing Agency Debit Memo, the user interface 21 may be configured to change the pricing context parameters in the Agency Debit Memo and re-audit the transaction. These changes may occur automatically based on the pricing context, or in response to the operator selecting one of the pricing context parameters. The user interface 21 may thereby reduce the amount of time required to generate dispute inquires as compared to conventional auditing systems lacking the dispute evaluation feature. If the ticketing office disputes the Agency Debit Memo by specifying certain parameters of the pricing context (e.g. passenger type was military, or a certain discount code was used), embodiments of the invention may facilitate inputting the specified pricing context parameters from the pricing context, and automatically initiate a new audit.

The program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of auditing a transaction, the transaction relating to a ticket sold by a first business entity for a travel product provided by a second business entity, the method comprising:
receiving, at a processor, first data defining a first price charged for the ticket by the first business entity;
receiving, at the processor, second data defining a first pricing context for the ticket, the first pricing context comprising a plurality of first pricing context parameters;
determining, by the processor, a second price for the ticket based on the plurality of first pricing context parameters of the first pricing context; and
comparing, by the processor, the first price to the second price.

2. The method of claim 1 further comprising:
determining whether to generate an agency debit memo based at least in part on whether the first price is less than the second price.

3. The method of claim 1 wherein the first data includes a plurality of ticket parameters, and further comprising:
generating, by the processor, a plurality of second pricing contexts for the ticket, each of the second pricing contexts comprising a unique combination of second pricing context parameters;
for each of the second pricing contexts, determining, by the processor, the second price for the ticket;
in response to one of the second prices matching the first price, defining the first pricing context as the second pricing context that produced the match; and
determining whether to generate an agency debit memo based at least in part on whether the plurality of first pricing context parameters, as defined by the second pricing context that produced the match, matches the plurality of ticket parameters.

4. The method of claim 3 wherein each of the second pricing contexts comprising the unique combination of second pricing context parameters is conditioned on the plurality of ticket parameters.

5. The method of claim 3 or claim 4 further comprising:
determining whether the first business entity is flagged for an enhanced audit,
wherein the processor only generates the plurality of second pricing contexts for the ticket if the first business entity is flagged for the enhanced audit.

6. The method of any of claims 3 to 5 wherein the agency debit memo is generated in response to one of the plurality of first pricing context parameters not matching a corresponding one of the plurality of ticket parameters.

7. The method of any of claims 3 to 6 further comprising:
determining, by the processor, the unique combinations of second pricing context parameters that are allowable based on the plurality of ticket parameters,
wherein the processor only generates the second pricing contexts comprising the unique combinations of second pricing context parameters that are allowable.

8. The method of any of claims 3 to 7 further comprising:
determining one or more corporate codes that the first business entity is entitled to use; and
defining one or more code pairs, each code pair including one of the one or more corporate codes and a first passenger type code,
wherein the processor only generates the second pricing contexts for the unique combinations of second pricing context parameters that include the corporate code and the first passenger type code of one of the one or more code pairs.

9. The method of claim 8 further comprising:
determining a second passenger type code based on the plurality of ticket parameters; and
determining one or more possible first passenger type codes that could have been used to generate the ticket based on the second passenger type code,
wherein the first passenger type code of each of the one or more code pairs is one of the one or more possible first passenger type codes.

10. The method of any of the preceding claims wherein the first data comprises a dispute of an audit price, the second price is determined in response to the dispute being based on one of the plurality of first pricing context parameters, and further comprising:
in response the second price matching the first price, displaying, on a user interface operatively coupled to the processor, a first recommendation to accept the dispute; and
in response to the second price matching the audit price, displaying, on the user interface, a second recommendation to reject the dispute.

11. The method of claim 10 further comprising:
in response to the second price not matching the first price or the audit price, displaying, on the user interface, a third recommendation to generate a new agency debit memo based at least in part on one or more of the plurality of first pricing context parameters.

12. The method of any of the preceding claims wherein the second price is determined by setting the second price equal to a stored result of an automated pricing performed by a Global Distribution System.

13. An apparatus for auditing a transaction, the transaction relating to a ticket sold by a first business entity for a travel product provided by a second business entity, the apparatus comprising:
a processor; and
a memory including instructions that, when executed by the processor, cause the apparatus to:
receive first data defining a first price charged for the ticket by the first business entity;
receive second data defining a first pricing context for the ticket, the first pricing context comprising a plurality of first pricing context parameters;
determine a second price for the ticket based on the plurality of first pricing context parameters of the first pricing context; and
compare the first price to the second price.

14. The apparatus of claim 13 wherein the instructions further cause the apparatus to perform the methods of any of claims 2 to 12.

15. A computer program product comprising:
a non-transitory computer readable storage medium; and
instructions stored on the non-transitory computer readable storage medium that, when executed by a processor, cause the processor to:
receive first data defining a first price charged for a ticket by a first business entity, the ticket being for a travel product provided by a second business entity;
receive second data defining a pricing context for the ticket, the pricing context comprising a plurality of pricing context parameters;
determine a second price for the ticket based on the plurality of pricing context parameters of the pricing context; and
compare the first price to the second price.
